# EUROPÄISCHE PATENTANMELDUNG

(11) **EP 3 664 510 A1**
(43) Veröffentlichungstag der Anmeldung: **10.06.2020**
(21) Anmeldenummer: 18210079.2
(22) Anmeldetag: 04.12.2018
(51) Int. Cl.: H04W 36/02, H04W 76/15

(54) **WECHSEL DES DATENÜBERTRAGUNGSWEGES OHNE VERLUST VON DATENPAKETEN**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kaiser, André, 90768 Fürth (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Datenpakete (P) werden von einer Datenquelle (1) zu einer Datensenke (2) übermittelt. Die Übermittlung an die Datensenke (2) erfolgt entweder in einem ersten Stream über eine erste drahtlose Schnittstelle (3) der Datenquelle (1), einen ersten Empfänger (4) und erste Knoten (K1) einer Gesamtheit von Knoten (K1, K2, K3) eines leitungsgebundenen offenen Kommunikationsnetzes oder in einem zweiten Stream über eine zweite drahtlose Schnittstelle (7) der Datenquelle (1), einen zweiten Empfänger (8) und zweite Knoten (K2) der Gesamtheit von Knoten (K1, K2, K3) des leitungsgebundenen offenen Kommunikationsnetzes. In beiden Fällen ist dem jeweiligen Stream eine jeweilige Streamidentifikation (SID1, SID2) zugeordnet, die in den gesendeten Datenpaketen (P) enthalten ist. Die Streams können parallel eingerichtet sein. Zum Einrichten des jeweiligen Streams werden von dem jeweiligen Empfänger (4, 8) und den jeweiligen Knoten (K1, K2) aufgrund einer entsprechenden Anforderung (A1, A2) der Datenquelle (1) Ressourcen reserviert. Dadurch ist gewährleistet, dass die Datenpakete (P) nach einer vorbestimmten jeweiligen Verzögerungszeit nach dem Aussenden des jeweiligen Datenpakets (P) bei der Datensenke (2) eintreffen. Die Streamidentifikationen (SID1, SID2) sind identisch. Die Datenpakete (P) umfassen Nutzdaten (6, 10) und einen Header (5, 9). Die Nutzdaten (6) zumindest eines Teils der an die verschiedenen Empfänger (4, 8) gesendeten Datenpakete (P) sind identisch. Zumindest diesen Datenpaketen (P) werden von der Datenquelle (1) identische Paketidentifikationen (PID) zugeordnet.

## Beschreibung

Die vorliegende Erfindung betrifft das Gebiet der Datenübertragung von einer mobilen Datenquelle zu einer Datensenke.

In der Industrie gibt es viele Elemente - beispielsweise Maschinen oder Maschinenteile - die ihre Position im Betrieb verändern. Dennoch müssen derartige bewegliche Elemente auch während des Betriebs mit anderen Elementen datentechnisch verbunden bleiben. Dies erfolgt oftmals über eine drahtlose Schnittstelle, über welche das jeweilige bewegliche Element mit einem anderen Element kommuniziert. In der Regel erfolgt, soweit das bewegliche Element als Datenquelle fungiert, eine drahtlose Übermittlung an einen Empfänger, von dem ausgehend eine leitungsgebundene Übermittlung an eine Datensenke erfolgt. In der Regel weist das bewegliche Element mehrere drahtlose Schnittstellen auf, um einen Wechsel des Empfängers problemlos durchführen zu können.

Der Vorgang der Anmeldung bei einem neuen Empfänger und der Abmeldung beim vorherigen Empfänger ist insbesondere bei Mobilfunknetzen als Roaming bekannt. Auch bei WLAN (wireless local area network) ist es bekannt, einen automatischen Wechsel einer Datenquelle von einem WLAN-Empfänger zu einem anderen WLAN-Empfänger zu ermöglichen.

Bei normalen Datenübertragungen ist der Wechsel von einem Empfänger zu einem anderen Empfänger problemlos. Der Wechsel ist immer noch mehr oder minder problemlos, wenn ein Verlust von Datenpaketen ausgeschlossen werden muss. Denn wenn ein Datenpaket - egal aus welchen Gründen - auf dem Weg von der Datenquelle zur Datensenke verloren gegangen ist, ist es lediglich erforderlich, dass die Datenquelle das Datenpaket erneut an die Datensenke ermittelt. Diese Vorgehensweise ist auch dann anwendbar, wenn der Verlust eines Datenpakets auf den Wechsel des Übertragungsweges zurückzuführen ist, also den Wechsel von einem Empfänger zu einem anderen Empfänger. In manchen Fällen müssen jedoch die Daten innerhalb einer vorbestimmten Zeit von der Datenquelle zur Datensenke übermittelt werden. Dieser Fall kann kritisch sein.

Für die Übermittlung von zeitkritischen Datenpaketen - das heißt von Datenpaketen, bei denen gewährleistet sein soll, dass an der Datenquelle - dem sogenannten Talker - eingespeiste Daten mit einer maximalen, vorab bekannten Verzögerung bei der Datensenke - dem sogenannten Listener - eintreffen, sind im Stand der Technik im Rahmen der Übertragung von audiovisuellen Datenströmen sogenannte Streams bekannt, wie sie beispielsweise von der AVB Task Group (AVB = Audio/Video Bridging) festgelegt sind. Ein Stream ist - allgemein gesprochen - eine Verbindung zwischen einer ersten Komponente und einer zweiten Komponente, die beide an ein offenes Kommunikationsnetz angeschlossen sind, wobei zusätzlich gewährleistet ist, dass Datenübertragungen innerhalb einer vorbestimmten Zeit abgeschlossen sind.

Ein Stream ist also eine speziell geschützte Verbindung des offenen Kommunikationsnetzes. Der Stream ist eine geschützte Verbindung, weil durch die Art der Verbindung gewährleistet ist, dass Daten, die von der Datenquelle über den Stream an die Datensenke übermittelt werden, binnen einer vorbestimmten maximalen Latenzzeit bei der Datensenke eintreffen. Es besteht also ein Schutz vor unzulässigen Verzögerungen.

Ein offenes Kommunikationsnetz ist ein Kommunikationsnetz, bei dem jede an das Kommunikationsnetz angeschlossene Komponente entsprechend ihren eigenen Vorgaben Daten in das Kommunikationsnetz einspeist und über das Kommunikationsnetz übertragene Daten mitliest. Hingegen ist den angeschlossenen Komponenten nicht bekannt, welche anderen Komponenten an das Kommunikationsnetz angeschlossen sind. Insbesondere können somit an ein offenes Kommunikationsnetz, das im Rahmen der vorliegenden Erfindung eingesetzt wird, auch weitere Komponenten angeschlossen sein, die nichts mit dem Stream zu tun haben. Es können also zusätzliche Komponenten vorhanden sein, die zwar miteinander, aber mit weder mit der Datenquelle noch der Datensenke kommunizieren oder zwar mit mindestens einer dieser Komponenten kommunizieren, aber nicht innerhalb des Streams zwischen der Datenquelle und der Datensenke. Weiterhin ist den angeschlossenen Komponenten - zumindest in der Regel - nicht die Topologie des offenen Kommunikationsnetzes bekannt. Dies gilt auch für die Datenquelle und die Datensenke. Das offene Kommunikationsnetz kann beispielsweise als Ethernet ausgebildet sein.

Die im Rahmen des Streams auftretende maximale Verzögerung ist abhängig von den Leitungsabschnitten und den einzelnen Knoten zwischen aufeinanderfolgenden Leitungsabschnitten des offenen Kommunikationsnetzes von der Datenquelle zur Datensenke. Die maximale Verzögerung wird beim Einrichten des Streams festgelegt.

Die entsprechenden Vorgehensweisen und Mechanismen sind auch für die Übertragung von Echtzeitdaten anwendbar. Hierfür sind durch die TSN Task Group (= TSN Time-Sensitive Networking) in der internationalen Norm IEEE 802.1 entsprechende Mechanismen definiert worden. Auch hier werden die für die audiovisuelle Übertragung von Daten bekannten Maßnahmen in prinzipiell gleicher Art und Weise eingesetzt, meist im industriellen Umfeld.

Die durch die AVB Task Group und die TSN Task Group definierten Möglichkeiten sind prinzipiell auch anwendbar, wenn die Datenquelle die Datenpakete drahtlos an den Empfänger übermittelt und erst ab dem Empfänger eine leitungsgebundene Übermittlung erfolgt. Kritisch ist in diesem Fall jedoch der Wechsel des Übertragungsweges, wenn also die Übertragung der Datenpakete nicht mehr über einen ersten Empfänger und von dort weiter zur Datensenke erfolgt, sondern von einem ersten zu einem zweiten Empfänger und damit zu einem anderen Datenpfad zur Datensenke gewechselt werden soll.

Die Aufgabe der vorliegenden Erfindung besteht darin, Möglichkeiten zu schaffen, mittels derer auch dann ein problemloser Wechsel des Übertragungsweges möglich ist, wenn von der Datenquelle Echtzeitdaten an die Datensenke übertragen werden sollen.

Die Aufgabe wird durch ein Übermittlungsverfahren mit den Merkmalen des Anspruchs 1 gelöst. Vorteilhafte Ausgestaltungen des Übermittlungsverfahrens sind Gegenstand der abhängigen Ansprüche 2 bis 5.

Erfindungsgemäß wird ein Übermittlungsverfahren für Datenpakete von einer Datenquelle zu einer Datensenke geschaffen,
- wobei in einem ersten Schritt von der Datenquelle über eine erste drahtlose Schnittstelle der Datenquelle eine Anforderung zur Einrichtung eines ersten Streams ausgesendet wird,
- wobei die erste Anforderung von einem ersten Empfänger empfangen und über erste Knoten einer Gesamtheit von Knoten eines leitungsgebundenen offenen Kommunikationsnetzes an die Datensenke weitergeleitet wird,
- wobei aufgrund der ersten Anforderung ein erster Pfad für den ersten Stream eingerichtet wird, der von der Datenquelle über den ersten Empfänger und die ersten Knoten zur Datensenke führt, und dem ersten Stream eine erste Streamidentifikation zugeordnet wird,
- wobei von dem ersten Empfänger und den ersten Knoten zur Übermittlung der Datenpakete Ressourcen reserviert werden, so dass gewährleistet ist, dass die Datenpakete des ersten Streams spätestens nach einer vorbestimmten ersten Verzögerungszeit nach dem Aussenden des jeweiligen Datenpakets durch die Datenquelle bei der Datensenke eintreffen,
- wobei in einem zweiten Schritt zumindest ein Teil der Datenpakete von der Datenquelle an den ersten Empfänger gesendet wird und von dem ersten Empfänger über die ersten Knoten an die Datensenke weitergeleitet wird,
- wobei die von der Datenquelle an den ersten Empfänger gesendeten Datenpakete die erste Streamidentifikation enthalten,
- wobei in einem während der Ausführung des zweiten Schrittes ausgeführten dritten Schritt von der Datenquelle über eine zweite drahtlose Schnittstelle der Datenquelle eine zweite Anforderung zur Einrichtung eines zweiten Streams ausgesendet wird,
- wobei die zweite Anforderung von einem zweiten Empfänger empfangen und über zweite Knoten der Gesamtheit von Knoten des leitungsgebundenen offenen Kommunikationsnetzes an die Datensenke weitergeleitet wird,
- wobei aufgrund der zweiten Anforderung ein zweiter Pfad für den zweiten Stream eingerichtet wird, der von der Datenquelle über den zweiten Empfänger und die zweiten Knoten zur Datensenke führt, und dem zweiten Stream eine zweite Streamidentifikation zugeordnet wird,
- wobei die zweite Streamidentifikation mit der ersten Streamidentifikation identisch ist,
- wobei von dem zweiten Empfänger und den zweiten Knoten zur Übermittlung der Datenpakete Ressourcen reserviert werden, so dass gewährleistet ist, dass die Datenpakete des zweiten Streams mit einer vorbestimmten zweiten maximalen Verzögerungszeit nach dem Aussenden des jeweiligen Datenpakets durch die Datenquelle bei der Datensenke eintreffen,
- wobei in einem während der Ausführung des zweiten Schrittes ausgeführten vierten Schritt zumindest ein Teil der Datenpakete von der Datenquelle an den zweiten Empfänger gesendet wird und von dem zweiten Empfänger über die zweiten Knoten an die Datensenke weitergeleitet wird,
- wobei die von der Datenquelle an den zweiten Empfänger gesendeten Datenpakete die zweite Streamidentifikation enthalten,
- wobei die Datenpakete Nutzdaten und einen Header umfassen und die Nutzdaten zumindest eines Teils der an den ersten Empfänger gesendeten Datenpakete mit den Nutzdaten zumindest eines Teils der an den zweiten Empfänger gesendeten Datenpakete identisch ist und
- wobei zumindest denjenigen an den ersten Empfänger und den zweiten Empfänger gesendeten Datenpaketen, deren Nutzdaten identisch sind, von der Datenquelle identische Paketidentifikationen zugeordnet werden.

Dadurch ist es ab dem Einrichten des zweiten Pfades möglich, für einen Übergangszeitraum die Datenpakete sowohl über den ersten als auch über den zweiten Pfad von der Datenquelle an die Datensenke zu übermitteln, wobei erkennbar ist, wenn Daten mehrfach übermittelt werden. Der Übergangszeitraum ist diejenige Zeitraum, während dessen sowohl die drahtlose Verbindung von der Datenquelle zum ersten Empfänger als auch die drahtlose Verbindung von der Datenquelle zum zweiten Empfänger eingerichtet ist und betrieben wird.

Die Erkennbarkeit einer mehrfachen Übermittlung kann beispielsweise dazu genutzt werden, dass zwar stets eine Übermittlung aller Datenpakete erfolgt, dass die Datensenke aber Datenpakete, deren Nutzdaten sie bereits anderweitig erhalten hat, nicht beachtet. Vorzugsweise aber ist das Übermittlungsverfahren derart ausgestaltet,
- dass die ersten und zweiten Knotenpunkte bei Empfang eines Datenpakets, dem eine Paketidentifikation zugeordnet ist, prüfen, ob sie bereits ein Datenpaket mit derselben Paketidentifikation empfangen haben, und
- dass die ersten und zweiten Knotenpunkte ein Datenpaket, dem eine Paketidentifikation zugeordnet ist, an den jeweils nachfolgenden ersten bzw. zweiten Knotenpunkt weiterleiten, wenn sie noch kein Datenpaket mit derselben Paketidentifikation empfangen haben, und anderenfalls das entsprechende Datenpaket nicht weiterleiten.

Dadurch kann eine Aussonderung redundanter Datenpakete zu einem frühestmöglichen Zeitpunkt erfolgen. Der Datenverkehr auf dem leitungsgebundenen offenen Kommunikationsnetz kann dadurch reduziert werden.

Vorzugsweise ist weiterhin vorgesehen, dass diejenigen der ersten Knoten, die zugleich auch zweite Knoten sind, zur Übermittlung der Datenpakete als Bestandteile des zweiten Streams dieselben Ressourcen reservieren, die sie bereits zur Übermittlung der Datenpakete als Bestandteile des ersten Streams reserviert haben. Dadurch können die Ressourcen der Knoten optimal genutzt werden.

Wie allgemein üblich, wird der erste Pfad nach dem Einrichten des zweiten Pfades wieder aufgelöst. Dadurch wird insbesondere die erste drahtlose Schnittstelle der Datenquelle frei, so dass nunmehr mittels der ersten drahtlosen Schnittstelle wieder ein neuer Empfänger gesucht werden kann. Die erste und die zweite drahtlose Schnittstelle vertauschen also sozusagen ihre Funktionalität.

Vorzugsweise enthalten die Header der Datenpakete jeweils eine Zusatzinformation, aus der hervorgeht, ob sie von der Datenquelle an den ersten oder den zweiten Empfänger gesendet werden. Dadurch kann ohne weiteres der Pfad ermittelt werden, auf dem die Datenpakete übermittelt werden.

Für die Ermittlung des ersten und des zweiten Pfades sind verschiedene Vorgehensweisen möglich. Beispielsweise können der erste und der zweite Pfad gemäß dem RSTP (RSTP = rapide spanning tree protocol) oder gemäß dem Mechanismus der Edge-Bridge-ID ermittelt werden. Die Ermittlung gemäß dem RSTP weist den Vorteil auf, dass nahezu in jedem Fall ein zulässiger Pfad aufgefunden werden kann. Die Ermittlung gemäß dem Mechanismus der Edge-Bridge-ID weist den Vorteil auf, dass ein aufgefundener Pfad stets kurz ist und die maximale Verzögerungszeit daher relativ klein ist. Weiterhin können im Falle der Ermittlung gemäß dem Mechanismus der Edge-Bridge-ID die Teilpfade vom jeweiligen Empfänger zur Datensenke vorab ermittelt werden.

Die Aufgabe wird weiterhin durch ein Datenübermittlungssystem mit den Merkmalen des Anspruchs 6 gelöst. Erfindungsgemäß wird ein Datenübermittlungssystem geschaffen,
- bei dem das Datenübermittlungssystem eine Datenquelle, eine Datensenke, einen ersten und einen zweiten Empfänger, sowie eine Gesamtheit von Knoten eines leitungsgebundenen offenen Kommunikationsnetzes umfasst,
- bei dem der erste Empfänger und die Datensenke über erste Knoten der Gesamtheit von Knoten und der zweite Empfänger und die Datensenke über zweite Knoten der Gesamtheit von Knoten miteinander verbunden sind und
- bei dem die Datenquelle, der erste und der zweite Empfänger, die Datensenke und zumindest die ersten und zweiten Knoten des leitungsgebundenen offenen Kommunikationsnetzes derart ausgebildet sind, dass sie im Betrieb gemäß einem Übermittlungsverfahren nach einem der obigen Ansprüche miteinander zusammenwirken.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Datenübermittlungssystem,
- FIG 2: ein Zeitdiagramm,
- FIG 3: ein Datenpaket,
- FIG 4: ein weiteres Zeitdiagramm,
- FIG 5: ein Datenpaket,
- FIG 6: ein Ablaufdiagramm,
- FIG 7: ein weiteres Ablaufdiagramm,
- FIG 8: ein weiteres Ablaufdiagramm,
- FIG 9: ein weiteres Ablaufdiagramm und
- FIG 10: ein weiteres Ablaufdiagramm.

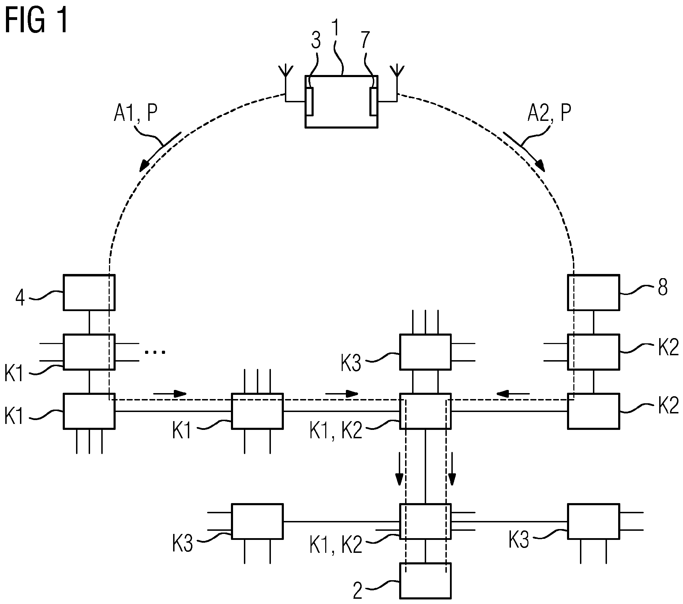

Gemäß FIG 1 weist ein Datenübermittlungssystem eine Datenquelle 1 auf. Die Datenquelle 1 ist eine mobile Datenquelle.

Sie kann sich also - zumindest innerhalb gewisser Grenzen - bewegen. Der Begriff "Datenquelle" im Sinne der vorliegenden Erfindung bedeutet dasjenige Element des Datenübermittlungssystems, das Datenpakete P (frames) generiert und aussendet. Die Datenpakete P werden von der Datenquelle 1 nicht anderweitig entgegengenommen und nur weitergeleitet. Die Eigenschaft, dass dieses Element des Datenübermittlungssystems die Datenquelle 1 ist, soll sich jedoch nur auf die Funktionalität im Rahmen der vorliegenden Erfindung beziehen. Es ist nicht ausgeschlossen, dass die Datenquelle 1 im Rahmen anderer Aktivitäten anderweitig wirkt, beispielsweise als Datensenke oder als Knoten des Datenübermittlungssystems.

Ausgehend von der Datenquelle 1 sollen die Datenpakete P an eine Datensenke 2 übermittelt werden. Der Begriff "Datensenke" im Sinne der vorliegenden Erfindung bedeutet dasjenige Element des Datenübermittlungssystems, das die Datenpakete P entgegennimmt und verwertet. Die Datenpakete P werden von der Datensenke 2 hingegen nicht mehr weitergeleitet. Die Eigenschaft, dass dieses Element des Datenübermittlungssystems die Datensenke 2 ist, soll sich jedoch nur auf die Funktionalität im Rahmen der vorliegenden Erfindung beziehen. Es ist nicht ausgeschlossen, dass die Datensenke 2 im Rahmen anderer Aktivitäten anderweitig wirkt, beispielsweise als Datenquelle oder als Knoten des Datenübermittlungssystems.

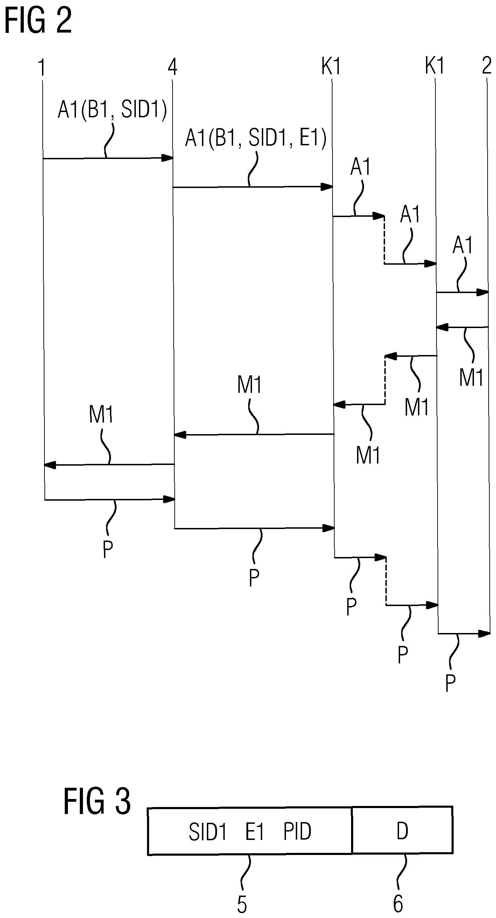

Zur Übermittlung der Datenpakete P von der Datenquelle 1 zur Datensenke 2 wird innerhalb des Datenübermittlungssystems zunächst in einem ersten Schritt ein erster Stream eingerichtet. Dies geschieht gemäß FIG 2 wie folgt:
Zunächst sendet die Datenquelle 1 eine erste Anforderung A1 zur Einrichtung des ersten Streams aus. Die erste Anforderung A1 umfasst entsprechend der Darstellung in FIG 2 insbesondere eine Beschreibung B1. Die Beschreibung B1 definiert die Bedingungen, die der erste Stream erfüllen muss. Die Bedingungen können insbesondere eine Datenrate und eine maximale Übertragungszeit umfassen. Die erste Anforderung A1 umfasst weiterhin eine erste Streamidentifikation SID1. Die Datenquelle 1 sendet die erste Anforderung A1 über eine erste drahtlose Schnittstelle 3 der Datenquelle 1 aus.

Die erste Anforderung A1 wird von einem ersten Empfänger 4 empfangen. Der erste Empfänger 4 - ein sogenannter Access Point - ist Bestandteil eines leitungsgebundenen offenen Kommunikationsnetzes. Der Begriff "Empfänger" im Sinne der vorliegenden Erfindung bedeutet dasjenige Element des Datenübermittlungssystems, das die von der Datenquelle 1 drahtlos ausgesendeten Datenpakete P drahtlos empfängt. Der erste Empfänger 4 selbst ist hingegen, wie bereits erwähnt, bereits Bestandteil des leitungsgebundenen offenen Kommunikationsnetzes. Die Eigenschaft, dass dieses Element des Datenübermittlungssystems der Empfänger 4 ist, soll sich jedoch nur auf die Funktionalität im Rahmen der vorliegenden Erfindung beziehen. Es ist nicht ausgeschlossen, dass der Empfänger 4 im Rahmen anderer Aktivitäten anderweitig wirkt, beispielsweise als Datensenke oder als Knoten des Datenübermittlungssystems.

Innerhalb des leitungsgebundenen offenen Kommunikationsnetzes ist der erste Empfänger 4 über erste Knoten K1 einer Gesamtheit von Knoten K1, K2, K3 des leitungsgebundenen offenen Kommunikationsnetzes mit der Datensenke 2 verbunden. Die Knoten K1, K2, K3 werden oftmals als Bridges bezeichnet. Der Begriff "Knoten" im Sinne der vorliegenden Erfindung bedeutet ein Element des Datenübermittlungssystems, das von anderen Elementen leitungsgebunden ausgesendete Datenpakete P ebenso leitungsgebunden empfängt und leitungsgebunden weiterleitet. Die Eigenschaft, dass diese Elemente des Datenübermittlungssystems Knoten K1, K2, K3 sind, soll sich jedoch nur auf die Funktionalität im Rahmen der vorliegenden Erfindung beziehen. Es ist nicht ausgeschlossen, dass die Knoten K1, K2, K3 im Rahmen anderer Aktivitäten anderweitig wirken, beispielsweise als Datenquelle oder als Datensenke des Datenübermittlungssystems.

Der erste Empfänger 4 reserviert, soweit erforderlich, für die spätere Übermittlung der Datenpakete P entsprechend der ersten Anforderung A1 Ressourcen des ersten Empfängers 4, beispielsweise Bandbreite zur Übermittlung von Daten und Speicherbereiche zur Zwischenspeicherung von Daten. Diese Reservierung ist zunächst nur vorläufig. Weiterhin fügt der erste Empfänger 4 der ersten Anforderung A1 eine erste Empfängeridentifikation E1 hinzu. Soweit nachfolgend von der ersten Anforderung A1 gesprochen wird, enthält diese also zusätzlich zur ersten Streamidentifikation SID1 auch die erste Empfängeridentifikation E1. Bei der ersten Empfängeridentifikation E1 kann es sich beispielsweise um die MAC-Adresse des ersten Empfängers 4 handeln.

Der erste Empfänger 4 leitet die erste Anforderung A1 (also einschließlich der ersten Empfängeridentifikation E1) über die ersten Knoten K1 an die Datensenke 2 weiter. Die Kommunikation erfolgt vom ersten Empfänger 4 an den benachbarten ersten Knoten K1, von dort zum nächsten ersten Knoten K1 usw., bis die erste Anforderung A1 schließlich bei der Datensenke 2 eintrifft. Jeder erste Knoten K1 reserviert- analog zum ersten Empfänger 4 - entsprechend der ersten Anforderung A1 Ressourcen des jeweiligen ersten Knotens K1. Auch diese Reservierungen sind zunächst nur vorläufig.

Nachdem die erste Anforderung A1 bei der Datensenke 2 eingetroffen ist, übermittelt die Datensenke 2 über die ersten Knoten K1 und den ersten Empfänger 4 eine erste Meldung M1 an die Datenquelle 1 zurück. Aufgrund des Empfangs der ersten Meldung M1 werden die vorläufigen Reservierungen der Ressourcen durch den ersten Empfänger 4 und die ersten Knoten K1 endgültig.

Somit wird aufgrund der ersten Anforderung A1 (genau genommen in Verbindung mit der ersten Meldung M1) ein erster Pfad für den ersten Stream eingerichtet, der von der Datenquelle 1 über den ersten Empfänger 4 und die ersten Knoten K1 zur Datensenke 2 führt. Der erste Pfad ist in FIG 1 gestrichelt eingezeichnet. Weiterhin wird dadurch dem ersten Stream die erste Streamidentifikation SID1 zugeordnet. Aufgrund der Reservierung der Ressourcen durch den ersten Empfänger 4 und die ersten Knoten K1 ist weiterhin gewährleistet, dass die Datenpakete P des ersten Streams spätestens nach einer vorbestimmten ersten Verzögerungszeit nach dem Aussenden des jeweiligen Datenpakets P durch die Datenquelle 1 bei der Datensenke 2 eintreffen. Insbesondere gewährleisten der erste Empfänger 4 und jeder erste Knotenpunkt K1 für den ersten Stream, dass die Verzögerungszeit, mit welcher der erste Empfänger 4 bzw. der jeweilige erste Knotenpunkt K1 die von ihm empfangenen Daten weiterleiten, zwischen einem für den ersten Empfänger 4 bzw. den jeweiligen ersten Knotenpunkt K1 vorbestimmten Minimalwert und einem für den ersten Empfänger 4 bzw. den jeweiligen ersten Knotenpunkt K1 vorbestimmten Maximalwert liegt. Dadurch ist auch die gesamte Zeit, die ab dem Aussenden eines Datenpakets P durch die Datenquelle 1 bis zum Empfangen dieses Datenpaket P durch die Datensenke 2 vergehen kann, entsprechend begrenzt. Die entsprechende Vorgehensweise zum Einrichten und Betreiben eines Streams ist Fachleuten geläufig und bekannt. Sie muss daher nicht weiter erläutert werden.

Der guten Ordnung halber sei noch ergänzt, dass die beteiligten Komponenten, also der erste Empfänger 4 und die ersten Knoten K1, prüfen, ob ihnen die entsprechenden Ressourcen zur Verfügung stehen. Wenn dies nicht der Fall ist, wird der erste Stream nicht eingerichtet und es ergeht eine entsprechende Meldung. Hierauf wird später noch näher eingegangen werden.

Nach dem Einrichten des ersten Streams werden entsprechend der Darstellung in FIG 2 von der Datenquelle 1 in einem zweiten Schritt Datenpakete P an den ersten Empfänger 4 gesendet. Die Datenpakete P werden von dem ersten Empfänger 4 über die ersten Knoten K1 an die Datensenke 2 weitergeleitet.

Die Datenpakete P enthalten entsprechend der Darstellung in FIG 3 einen Header 5 sowie Nutzdaten 6. Der Header 5 umfasst entsprechend der Darstellung in FIG 3 insbesondere die erste Streamidentifikation SID1 und die erste Empfängeridentifikation E1. Die erste Empfängeridentifikation E1 entspricht somit einer Zusatzinformation, aus der hervorgeht, dass das jeweilige Datenpaket P von der Datenquelle 1 an den ersten Empfänger 4 gesendet wurde.

Der Header 5 kann weiterhin eine Paketidentifikation PID enthalten. Auf die Bedeutung und die Funktion der Paketidentifikation PID wird später noch näher eingegangen werden. Oftmals umfasst der Header 5 weiterhin auch eine logische Quelladresse und/oder eine logische Zieladresse. Dies ist im Rahmen der vorliegenden Erfindung jedoch von untergeordneter Bedeutung.

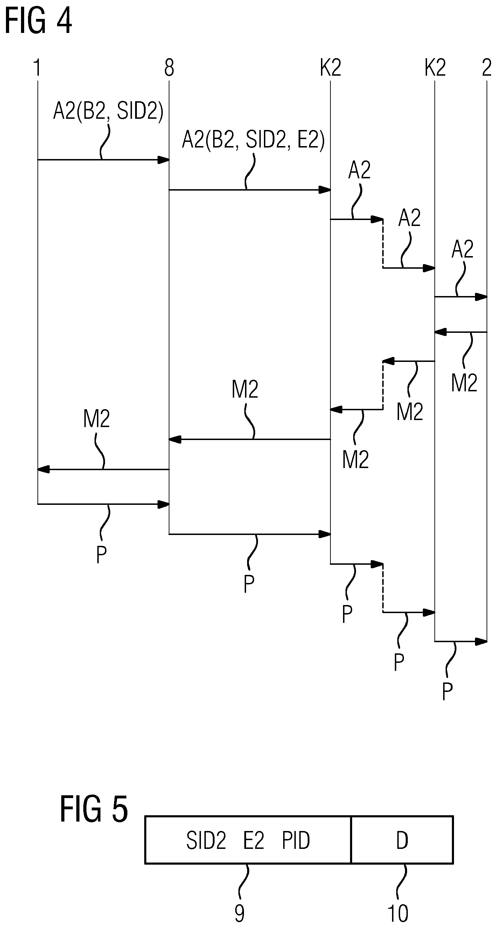

Nachfolgend wird in Verbindung mit FIG 4 ein weiterer Betrieb des Datenübermittlungssystems erläutert. Dieser Betrieb erfolgt in einem dritten Schritt und einem vierten Schritt. Der dritte Schritt und der vierte Schritt werden während der Ausführung des zweiten Schrittes ausgeführt, also während der Übermittlung der Datenpakete P innerhalb des ersten Streams.

Der dritte Schritt korrespondiert über weite Strecken mit dem ersten Schritt. Insbesondere wird im dritten Schritt ein zweiter Stream eingerichtet. Der vierte Schritt korrespondiert über weite Strecken mit dem zweiten Schritt. Insbesondere erfolgt im vierten Schritt ebenfalls eine Übertragung von Datenpaketen P. Der dritte Schritt und - nach erfolgreichem Abschluss des dritten Schrittes - der vierte Schritt können beispielsweise insbesondere dann ausgeführt werden, wenn eine für die Qualität der drahtlosen Kommunikation zwischen der Datenquelle 1 und dem ersten Empfänger 4 charakteristische Größe unter einen ersten Schwellenwert sinkt. Ein derartiges Absinken kann beispielsweise bewirken, dass die Datenquelle 1 über eine zweite drahtlose Schnittstelle 7 nach möglichen weiteren Empfängern sucht und beispielsweise den zweiten Empfänger 8 findet. Falls die Datenquelle 1 bei ihrer Suche mehrere mögliche zweite Empfänger 8 findet, selektiert sie in der Regel den zweiten Empfänger 8, bei dem eine für die Qualität der drahtlosen Kommunikation zwischen der Datenquelle 1 und dem jeweiligen zweiten Empfänger 8 charakteristische Größe den größten Wert aufweist.

Zum Einrichten des zweiten Streams sendet die Datenquelle 1 gemäß FIG 2 eine zweite Anforderung A2 zur Einrichtung des zweiten Streams aus. Die zweite Anforderung A2 entspricht inhaltlich der ersten Anforderung A1. Insbesondere umfasst sie eine Beschreibung B2, welche die Bedingungen definiert, die der zweite Stream erfüllen muss. Die Bedingungen sind dieselben wie bei der Beschreibung B1 des ersten Streams Weiterhin umfasst die zweite Anforderung A2 eine zweite Streamidentifikation SID2. Die zweite Streamidentifikation SID2 ist identisch mit der ersten Streamidentifikation SID1. Im Unterschied zur ersten Anforderung A2 sendet die Datenquelle 1 die zweite Anforderung A2 jedoch nicht über die erste drahtlose Schnittstelle 3 der Datenquelle 1 aus, sondern über die zweite drahtlose Schnittstelle 7.

Die zweite Anforderung A2 wird von einem zweiten Empfänger 8 empfangen. Der zweite Empfänger 8 ist - ebenso wie der erste Empfänger 4 - Bestandteil des leitungsgebundenen offenen Kommunikationsnetzes.

Innerhalb des leitungsgebundenen offenen Kommunikationsnetzes ist der zweite Empfänger 8 über zweite Knoten K2 der Gesamtheit von Knoten K1, K2, K3 des leitungsgebundenen offenen Kommunikationsnetzes mit der Datensenke 2 verbunden.

Der zweite Empfänger 8 reserviert, soweit erforderlich, für die spätere Übermittlung der Datenpakete P entsprechend der zweiten Anforderung A2 Ressourcen des zweiten Empfängers 8. Es handelt sich hierbei um gleichartige Ressourcen wie beim ersten Empfänger 4. Weiterhin fügt der zweite Empfänger 8 der zweiten Anforderung A2 eine zweite Empfängeridentifikation E2 hinzu. Die zweite Empfängeridentifikation E2 unterscheidet sich von der ersten Empfängeridentifikation E1. Soweit nachfolgend von der zweiten Anforderung A2 gesprochen wird, enthält diese also zusätzlich zur zweiten Streamidentifikation SID2 auch die zweite Empfängeridentifikation E2. Weiterhin enthält zweite Anforderung A2 somit zwar dieselbe Streamidentifikation wie die erste Anforderung A1, aber eine andere Empfängeridentifikation.

Der zweite Empfänger 8 leitet die zweite Anforderung A2 (also einschließlich der zweiten Empfängeridentifikation E2) über die zweiten Knoten K2 an die Datensenke 2 weiter. Die Kommunikation erfolgt vom zweiten Empfänger 8 an den benachbarten zweiten Knoten K2, von dort zum nächsten zweiten Knoten K2 usw., bis die zweite Anforderung A2 schließlich bei der Datensenke 2 eintrifft. Jeder zweite Knoten K2 reserviert- analog zu den ersten Knoten K1 - entsprechend der zweiten Anforderung A2 Ressourcen des jeweiligen zweiten Knotens K2. Auch diese Reservierungen sind zunächst nur vorläufig.

Nachdem die zweite Anforderung A2 bei der Datensenke 2 eingetroffen ist, übermittelt die Datensenke 2 über die zweiten Knoten K2 und den zweiten Empfänger 8 eine zweite Meldung M2 an die Datenquelle 1 zurück. Aufgrund des Empfangs der zweiten Meldung M2 werden die vorläufigen Reservierungen der Ressourcen durch den zweiten Empfänger 8 und die zweiten Knoten K2 endgültig.

Somit wird aufgrund der zweiten Anforderung A2 (genau genommen in Verbindung mit der zweiten Meldung M2) ein zweiter Pfad für den zweiten Stream eingerichtet, der von der Datenquelle 1 über den zweiten Empfänger 8 und die zweiten Knoten K2 zur Datensenke 2 führt. Der zweite Pfad ist in FIG 1 ebenfalls gestrichelt eingezeichnet. Weiterhin wird dadurch dem zweiten Stream die zweite Streamidentifikation SID2 zugeordnet, auch wenn diese mit der ersten Streamidentifikation SID1 identisch ist. Aufgrund der Reservierung der Ressourcen durch den zweiten Empfänger 8 und die zweiten Knoten K2 ist weiterhin - ebenso wie beim ersten Stream und auf völlig analoge Art und Weise - gewährleistet, dass die Datenpakete P des zweiten Streams spätestens nach einer vorbestimmten zweiten Verzögerungszeit nach dem Aussenden des jeweiligen Datenpakets P durch die Datenquelle 1 bei der Datensenke 2 eintreffen.

Der guten Ordnung halber sei erneut ergänzt, dass die beteiligten Komponenten, also der zweite Empfänger 8 und die zweiten Knoten K2, prüfen, ob ihnen die entsprechenden Ressourcen zur Verfügung stehen. Wenn dies nicht der Fall ist, wird der zweite Stream nicht eingerichtet und es ergeht eine entsprechende Meldung. Hierauf wird später noch näher eingegangen werden.

Nach dem Einrichten des zweiten Streams werden entsprechend der Darstellung in FIG 4 von der Datenquelle 1 im vierten Schritt Datenpakete P an den zweiten Empfänger 8 gesendet. Die Datenpakete P werden von dem zweiten Empfänger 8 über die zweiten Knoten K2 an die Datensenke 2 weitergeleitet.

Die Datenpakete P sind auf die gleiche Art und Weise wie zuvor in Verbindung mit FIG 3 erläutert konfiguriert. Insbesondere umfasst der Header 9 der Datenpakete P entsprechend der Darstellung in FIG 5 die zweite Streamidentifikation SID2 und die zweite Empfängeridentifikation E2. Der Header 9 kann weiterhin die Paketidentifikation PID enthalten. Oftmals umfasst der Header 9 weiterhin auch eine logische Quelladresse und/oder eine logische Zieladresse.

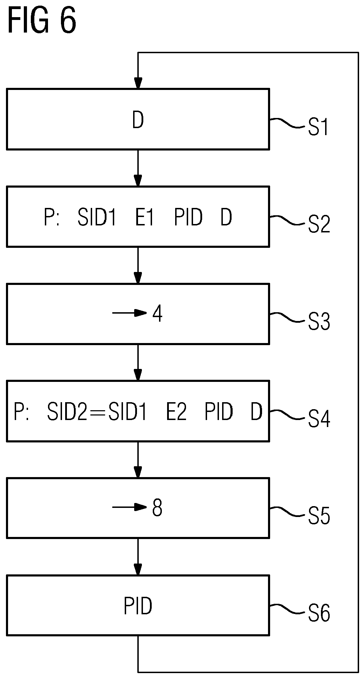

Durch die kombinierte Vorgehensweise der FIG 2 und 4 ist es somit möglich, Datenpakete P nach Bedarf sowohl über den ersten Stream als auch den zweiten Stream von der Datenquelle 1 an die Datensenke 2 zu übermitteln. Dies kann insbesondere dazu genutzt werden, anfänglich - wenn also nur der erste Stream eingerichtet ist - die Datenpakete P ausschließlich über den ersten Stream an die Datensenke 2 zu übermitteln und nach der späteren Einrichtung des zweiten Streams Datenpakete P mit inhaltlich gleichen Nutzdaten 6, 10 über beide Streams an die Datensenke 2 zu übermitteln. Dies ist insbesondere dann von Bedeutung, wenn die Datenquelle 1 sich zunächst ausschließlich im Empfangsbereich des ersten Empfängers 4 befindet, sodann in einem Bereich gerät, in dem sie sich zusätzlich auch im Empfangsbereich des zweiten Empfängers 8 befindet und sich schließlich ausschließlich im Empfangsbereich des zweiten Empfängers 8 befindet. Dies wird nachstehend in Verbindung mit FIG 6 näher erläutert. Im Rahmen der in Verbindung mit FIG 6 erläuterten Vorgehensweise wird vorausgesetzt, dass beide Streams bereits eingerichtet sind.

Gemäß FIG 6 stellt die Datenquelle 1 in einem Schritt S1 Daten D zusammen, die von der Datenquelle 1 an die Datensenke 2 übermittelt werden sollen.

In einem Schritt S2 bildet die Datenquelle 1 ein Datenpaket P. Dieses Datenpaket P enthält - vergleiche auch FIG 3 - als Header 5 die erste Streamidentifikation SID1, die erste Empfängeridentifikation E1 und die Paketidentifikation PID und als Nutzdaten 6 die Daten D.

In einem Schritt S3 übermittelt die Datenquelle 1 das im Schritt S2 erstellte Datenpaket P an den ersten Empfänger 4. Wichtig ist, dass die Paketidentifikation PID, soweit es die Übermittlung an den ersten Empfänger 4 betrifft, einen bestimmten Wert aufweist, der bei einer erneuten Ermittlung eines Datenpaketes P mit anderen Nutzdaten 6 an den ersten Empfänger 4 einen anderen Wert aufweist.

In einem Schritt S4 bildet die Datenquelle 1 erneut ein Datenpaket P. Dieses Datenpaket P enthält - vergleiche auch FIG 5 - als Header 9 die zweite Streamidentifikation SID2, die zweite Empfängeridentifikation E2 und ebenfalls die Paketidentifikation PID und als Nutzdaten 10 ebenfalls die Daten D. Wichtig ist, dass sowohl die Paketidentifikation PID denselben Wert wie zuvor aufweist als auch die Nutzdaten 10 dieselben Daten wie zuvor sind. Dies stellt keinen Widerspruch zu der vorherigen Aussage dar, da nunmehr zwar Nutzdaten 10 mit derselben Paketidentifikation PID wie zuvor übermittelt werden sollen, aber eben nicht an den ersten Empfänger 4, sondern an den zweiten Empfänger 8.

In einem Schritt S5 übermittelt die Datenquelle 1 das im Schritt S4 erstellte Datenpaket P an den zweiten Empfänger 8.

In einem Schritt S6 modifiziert die Datenquelle 1 die Paketidentifikation PID. Beispielsweise kann, falls die Paketidentifikation PID eine laufende Nummer ist, die Paketidentifikation PID inkrementiert werden. Es sind aber ersichtlich auch andere Vorgehensweisen möglich.

Die obenstehende Erläuterung zum Aussenden von Datenpaketen P mit identischen Paketidentifikationen PID ist Fachleuten als solche bekannt. Es kann auf die internationale Norm IEEE 802.1 CB verwiesen werden.

Aus der obenstehend in Verbindung mit FIG 6 geschilderten Vorgehensweise ergibt sich auch der Sinn und Zweck der Paketidentifikation PID. Denn dadurch ist für jede empfangende Einheit - sei es ein Knotenpunkt K1, K2, K3, sei es die Datensenke 2 - erkennbar, wenn sie inhaltlich identische Nutzdaten 6, 10 erhält.

Es ist möglich, die jeweilige Paketidentifikation PID jedem Datenpaket P zuzuordnen. Zumindest bei denjenigen Datenpaketen P, die von der Datenquelle 1 sowohl über den ersten Stream als auch über den zweiten Stream übertragen werden, ist dies jedoch erforderlich.

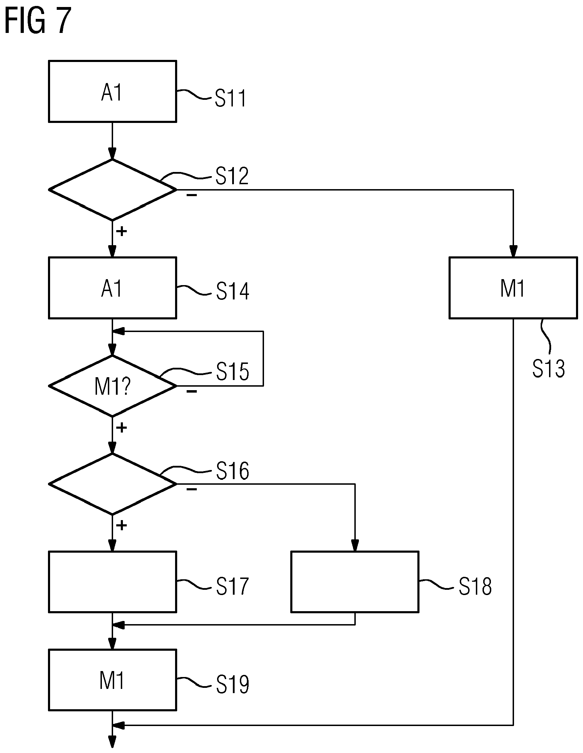

Nachstehend wird in Verbindung mit FIG 7 detaillierter die prinzipielle Vorgehensweise der ersten Knoten K1 beim Einrichten des ersten Streams erläutert. Die Vorgehensweise von FIG 7 ist auf einen einzelnen der ersten Knoten K1 bezogen. Nachfolgend wird daher nur von einem einzelnen der ersten Knoten K1 gesprochen. Die Vorgehensweise wird aber für jeden der ersten Knoten K1 ausgeführt.

Gemäß FIG 7 nimmt der erste Knoten K1 in einem Schritt S11 von einer vorgeordneten Einrichtung die erste Anforderung A1 entgegen. Bei der vorgeordneten Einrichtung handelt es sich um den ersten Empfänger 4 oder um einen ersten Knoten K1, der zwischen dem ersten Empfänger 4 und dem momentan betrachteten ersten Knoten K1 angeordnet ist.

In einem Schritt S12 prüft der erste Knoten K1, ob ihm die angeforderten Ressourcen zur Verfügung stehen. Wenn dies nicht der Fall ist, verweigert der erste Knoten K1 in einem Schritt S13 die Einrichtung des Streams und übermittelt eine entsprechende erste Meldung M1 an die vorgeordnete Einrichtung zurück. Anderenfalls reserviert der erste Knoten K1 in einem Schritt S14 vorläufig die angeforderten Ressourcen und leitet die erste Anforderung A1 an eine nachgeordnete Einrichtung weiter. Bei der nachgeordneten Einrichtung handelt es sich um die Datensenke 2 oder um einen ersten Knoten K1, der zwischen der Datensenke 2 und dem momentan betrachteten ersten Knoten K1 angeordnet ist.

In einem Schritt S15 wartet der erste Knoten K1 von der nachgeordneten Einrichtung den Erhalt der ersten Meldung M1 ab. In einem Schritt S16 prüft der erste Knoten K1, ob die erhaltene erste Meldung M1 eine Bestätigung zur endgültigen Einrichtung des ersten Streams oder eine Verweigerung der Einrichtung des ersten Streams ist. Im Falle einer Bestätigung ändert der erste Knoten K1 in einem Schritt S17 die zuvor vorläufige Reservierung in "endgültig" ab. Im Falle einer Verweigerung gibt der erste Knoten K1 in einem Schritt S18 die vorläufig reservierten Ressourcen wieder frei. In beiden Fällen übermittelt der erste Knoten K1 die erhaltene erste Meldung M1 an die vorgeordnete Einrichtung weiter.

Eine völlig analoge Vorgehensweise ist auch für das Einrichten des zweiten Streams möglich.

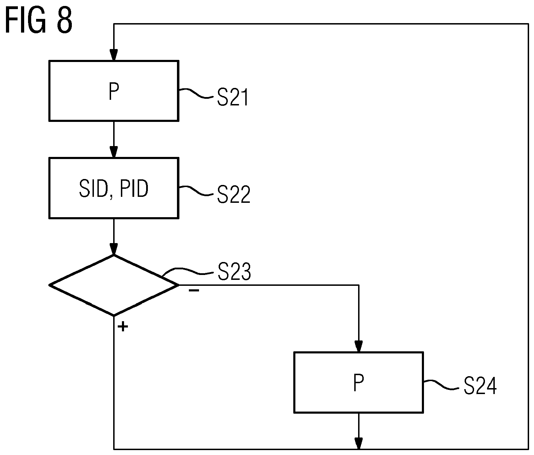

Wie aus FIG 1 ersichtlich ist, ist es möglich, dass ein erster Knoten K1 zugleich auch ein zweiter Knoten K2 ist. Nachstehend wird in Verbindung mit FIG 8 detaillierter die bevorzugte Vorgehensweise erläutert, die von derartigen Knoten K1, K2 ausgeführt wird. Die Vorgehensweise von FIG 8 ist auf einen einzelnen derartigen Knoten K1, K2 bezogen. Nachfolgend wird die Vorgehensweise für einen einzelnen derartigen Knoten K1, K2 erläutert. Sie wird aber für jeden derartigen Knoten K1, K2 ausgeführt. Weiterhin wird dieser Knoten K1, K2 nachstehend nur als erster Knoten bezeichnet und auch nur das Bezugszeichen K1 verwendet. Er könnte aber ebenso als zweiter Knoten bezeichnet werden und das Bezugszeichen K2 verwendet werden.

Gemäß FIG 8 nimmt der erste Knoten K1 in einem Schritt S21 von der vorgeordneten Einrichtung ein Datenpaket P entgegen. In einem Schritt S22 extrahiert der erste Knoten K1 aus dem Datenpaket P die Streamidentifikation SID1 bzw. SID2 und - falls vorhanden - die Paketidentifikation PID. In einem Schritt S23 prüft der erste Knoten K1, ob er bereits ein Datenpaket P mit derselben Streamidentifikation SID1 bzw. SID2 und derselben Paketidentifikation PID erhalten hat. Wenn dies nicht der Fall ist, leitet der erste Knoten K1 das empfangene Datenpaket P in einem Schritt S24 an die nachgeordnete Einrichtung weiter. Anderenfalls führt der erste Knoten K1 den Schritt S24 nicht aus. Er leitet in diesem Fall also das entsprechende Datenpaket P nicht an die nachgeordnete Einrichtung weiter.

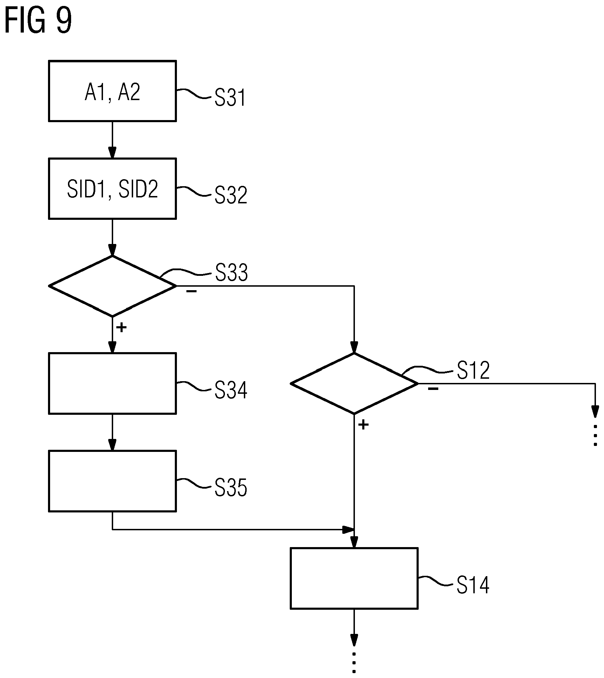

Nachstehend wird in Verbindung mit FIG 9 eine bevorzugte Vorgehensweise erläutert, die von den Knoten K1, die zugleich auch zweite Knoten K2 sind, im Rahmen der Reservierung der Ressourcen ergriffen wird. Die Vorgehensweise von FIG 9 ist eine bevorzugte Ausgestaltung der Vorgehensweise von FIG 7.

Gemäß FIG 9 nimmt der erste Knoten K1 in einem Schritt S31 von der vorgeordneten Einrichtung eine Anforderung A1, A2 entgegen. Es kann sich bei der Anforderung A1, A2 um die erste Anforderung A1 oder um die zweite Anforderung A2 handeln. Bei der vorgeordneten Einrichtung handelt es sich um den ersten Empfänger 4 oder den zweiten Empfänger 8 oder um einen ersten oder zweiten Knoten K1, K2, der zwischen dem ersten Empfänger 4 oder dem zweiten Empfänger 8 und dem momentan betrachteten ersten Knoten K1 angeordnet ist.

In einem Schritt S32 extrahiert der erste Knoten K1 aus der Anforderung A1, A2 die Streamidentifikation SID1, SID2. In einem Schritt S33 prüft der erste Knoten K1, ob er für einen Stream mit der extrahierten Streamidentifikation SID1, SID2 bereits Ressourcen reserviert hat. Wenn dies nicht der Fall ist, geht der erste Knoten K1 zum Schritt S12 über. Die weitere Vorgehensweise ist in diesem Fall dieselbe die obenstehend in Verbindung mit FIG 7 erläutert. Wenn dies jedoch der Fall ist, der erste Knoten K1 also bereits Ressourcen für einen Stream mit der extrahierten Streamidentifikation SID1, SID2 reserviert hat, reserviert der erste Knoten K1 zur Übermittlung der Datenpakete P als Bestandteile des zweiten Streams in einem Schritt S34 ein und dieselben Ressourcen, die er bereits zur Übermittlung der Datenpakete P als Bestandteile des ersten Streams reserviert hat.

Der erste Knoten K1 muss sich in diesem Fall selbstverständlich "merken", dass er die entsprechenden Ressourcen mehrfach reserviert hat. Dies kann beispielsweise dadurch geschehen, dass der erste Knoten K1 in einem Schritt S35 einen Zähler auf einen geeigneten Wert setzt. Der Wert kann insbesondere der Anzahl an weiteren Reservierungen entsprechen. Bei der zweiten Reservierung kann der Zähler also auf den Wert eins gesetzt werden, bei der dritten Reservierung auf den Wert zwei usw. Es sind auch andere Vorgehensweisen möglich.

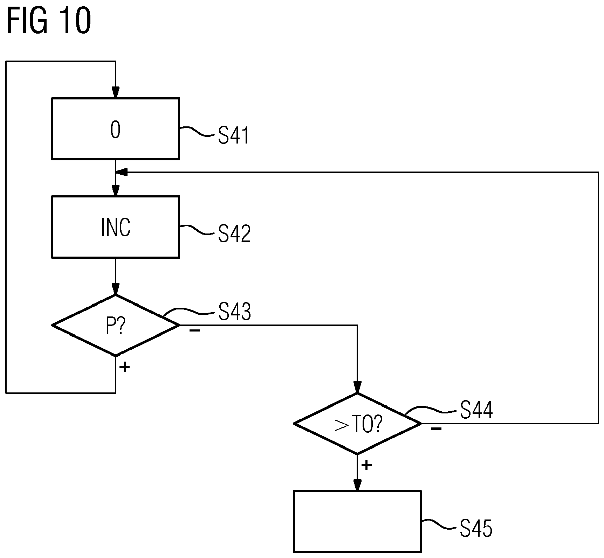

Nach dem Einrichten des zweiten Pfades kann der erste Pfad wieder aufgelöst werden. Dies kann im Prinzip auf die gleiche Art und Weise erfolgen, die auch im Stand der Technik realisiert wird. Mit dem Auflösen des ersten Pfades geben der erste Empfänger 4 und die ersten Knoten K1 die zuvor reservierten Ressourcen für eine erneute Vergabe wieder frei. Eine mögliche Vorgehensweise wird nachstehend rein beispielhaft in Verbindung mit FIG 10 näher erläutert.

Im Rahmen von FIG 10 wird angenommen, dass über den eingerichteten Stream - es kann sich hier um den ersten oder um den zweiten Stream handeln - immer wieder Daten übertragen werden müssen. Wenn für eine hinreichend lange Zeit keine Daten mehr übertragen werden, kann dies als hinreichendes Indiz gewertet werden, dass die drahtlose Verbindung der Datenquelle 1 zum entsprechenden Empfänger 4 bzw. 8 abgerissen ist.

Gemäß FIG 10 kann nach der endgültigen Reservierung der Ressourcen - beispielsweise nach dem Schritt S17 von FIG 7 - der entsprechende erste bzw. zweite Knoten K1, K2 in einem Schritt S41 einen Timer auf den Wert 0 setzen. In einem Schritt S42 inkrementiert der entsprechende erste bzw. zweite Knoten K1, K2 den Timer. In einem Schritt S43 prüft der entsprechende erste bzw. zweite Knoten K1, K2, ob er ein Datenpaket P empfangen hat. Wenn dies der Fall ist, geht der entsprechende erste bzw. zweite Knoten K1, K2 zum Schritt S41 zurück. Der Timer wird dadurch zurückgesetzt. Wenn dies hingegen nicht der Fall ist, geht der entsprechende erste bzw. zweite Knoten K1, K2 zu einem Schritt S44 über. Im Schritt S44 prüft der entsprechende erste bzw. zweite Knoten K1, K2, ob der Wert des Timers einen Grenzwert T0 überschreitet. Solange dies nicht der Fall ist, geht der entsprechende erste bzw. zweite Knoten K1, K2 zum Schritt S42 zurück. Anderenfalls nimmt der entsprechende erste bzw. zweite Knoten K1, K2 an, dass die drahtlose Verbindung abgerissen ist. Er gibt daher in einem Schritt S45 reservierten Ressourcen frei.

Es sind auch andere Vorgehensweisen zum Auflösen des ersten Pfades möglich. Insbesondere ist es möglich, den ersten Pfad durch eine aktive Aktion der Datenquelle 1 aufzulösen. Beispielsweise kann die Datenquelle 1 die Qualität der drahtlosen Kommunikation zwischen der Datenquelle 1 und dem ersten Empfänger 4 und die Qualität der drahtlosen Kommunikation zwischen der Datenquelle 1 und dem zweiten Empfänger 8 überwachen und das Auflösen des ersten Pfades initiieren, wenn eine für die Qualität der drahtlosen Kommunikation zwischen der Datenquelle 1 und dem zweiten Empfänger 8 charakteristische Größe einen zweiten Schwellenwert übersteigt. Der zweite Schwellenwert ist in der Regel größer als der erste Schwellenwert. Alternativ oder zusätzlich kann die Datenquelle 1 überwachen, ob die für die Qualität der drahtlosen Kommunikation zwischen der Datenquelle 1 und dem ersten Empfänger 4 charakteristische Größe um ein hinreichendes Maß kleiner als die für die Qualität der drahtlosen Kommunikation zwischen der Datenquelle 1 und dem zweiten Empfänger 8 charakteristische Größe ist. Im Falle eines aktiven Auflösens des ersten Pfades kann das Auflösen analog zum Einrichten des ersten Pfades erfolgen. Die entsprechende Vorgehensweise ist Fachleuten allgemein bekannt.

Der guten Ordnung halber sei ergänzt, dass die Freigabe der Ressourcen in dem Fall, dass eine mehrfache Reservierung für mehrere Streams erfolgt ist, nicht mit einer tatsächlichen Freigabe der Ressourcen verbunden ist, sondern nur mit einer entsprechenden Anpassung des Vermerks, für wie viele Streams die Ressourcen reserviert sind. Beispielsweise kann in diesem Fall im Schritt S45 der Wert des in Verbindung mit FIG 9 erwähnten Zählers angepasst werden.

Die vorliegende Erfindung wurde vorliegend in Verbindung mit einem ersten und einem zweiten Stream erläutert. Sie ist aber ohne weiteres auch auf drei, vier oder noch mehr Streams erweiterbar. Es ist lediglich erforderlich, dass die Datenquelle 1 eine entsprechende Anzahl an drahtlosen Schnittstellen 3, 7 aufweist.

Die vorliegende Erfindung ist prinzipiell universell einsetzbar. In der Regel wird sie jedoch bei industriellen Steuerungssystemen wie beispielsweise der Kommunikation zwischen Sensoren und einer Zentraleinheit einer speicherprogrammierbaren Steuerung eingesetzt.

Zusammengefasst betrifft die vorliegende Erfindung somit folgenden Sachverhalt:
Datenpakete P werden von einer Datenquelle 1 zu einer Datensenke 2 übermittelt. Die Übermittlung an die Datensenke 2 erfolgt entweder in einem ersten Stream über eine erste drahtlose Schnittstelle 3 der Datenquelle 1, einen ersten Empfänger 4 und erste Knoten K1 einer Gesamtheit von Knoten K1, K2, K3 eines leitungsgebundenen offenen Kommunikationsnetzes oder in einem zweiten Stream über eine zweite drahtlose Schnittstelle 7 der Datenquelle 1, einen zweiten Empfänger 8 und zweite Knoten K2 der Gesamtheit von Knoten K1, K2, K3 des leitungsgebundenen offenen Kommunikationsnetzes. In beiden Fällen ist dem jeweiligen Stream eine jeweilige Streamidentifikation SID1, SID2 zugeordnet, die in den gesendeten Datenpaketen P enthalten ist. Die Streams können parallel eingerichtet sein. Zum Einrichten des jeweiligen Streams werden von dem jeweiligen Empfänger 4, 8 und den jeweiligen Knoten K1, K2 aufgrund einer entsprechenden Anforderung A1, A2 der Datenquelle 1 Ressourcen reserviert. Dadurch ist gewährleistet, dass die Datenpakete P nach einer vorbestimmten jeweiligen Verzögerungszeit nach dem Aussenden des jeweiligen Datenpakets P bei der Datensenke 2 eintreffen. Die Streamidentifikationen SID1, SID2 sind identisch. Die Datenpakete P umfassen Nutzdaten 6, 10 und einen Header 5, 9. Die Nutzdaten 6 zumindest eines Teils der an die verschiedenen Empfänger 4, 8 gesendeten Datenpakete P sind identisch. Zumindest diesen Datenpaketen P werden von der Datenquelle 1 identische Paketidentifikationen PID zugeordnet.

Die vorliegende Erfindung weist viele Vorteile auf. Insbesondere ist es möglich, auf einfache Weise eine dauerhafte Verbindung von der Datenquelle 1 zur Datensenke 2 aufrechtzuerhalten, obwohl die Datenquelle 1 sich bewegt und nacheinander über verschiedene Empfänger 4, 8 und hiermit korrespondierend über verschiedene Pfade mit der Datensenke 2 kommuniziert. Ein Verlust von Datenpaketen P wird vermieden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Übermittlungsverfahren für Datenpakete (P) von einer Datenquelle (1) zu einer Datensenke (2),
- wobei in einem ersten Schritt von der Datenquelle (1) über eine erste drahtlose Schnittstelle (3) der Datenquelle (1) eine Anforderung (A1) zur Einrichtung eines ersten Streams ausgesendet wird,
- wobei die erste Anforderung (A1) von einem ersten Empfänger (4) empfangen und über erste Knoten (K1) einer Gesamtheit von Knoten (K1, K2, K3) eines leitungsgebundenen offenen Kommunikationsnetzes an die Datensenke (2) weitergeleitet wird,
- wobei aufgrund der ersten Anforderung (A1) ein erster Pfad für den ersten Stream eingerichtet wird, der von der Datenquelle (1) über den ersten Empfänger (4) und die ersten Knoten (K1) zur Datensenke (2) führt, und dem ersten Stream eine erste Streamidentifikation (SID1) zugeordnet wird,
- wobei von dem ersten Empfänger (4) und den ersten Knoten (K1) zur Übermittlung der Datenpakete (P) Ressourcen reserviert werden, so dass gewährleistet ist, dass die Datenpakete (P) des ersten Streams spätestens nach einer vorbestimmten ersten Verzögerungszeit nach dem Aussenden des jeweiligen Datenpakets (P) durch die Datenquelle (1) bei der Datensenke (2) eintreffen,
- wobei in einem zweiten Schritt zumindest ein Teil der Datenpakete (P) von der Datenquelle (1) an den ersten Empfänger (4) gesendet wird und von dem ersten Empfänger (4) über die ersten Knoten (K1) an die Datensenke (2) weitergeleitet wird,
- wobei die von der Datenquelle (1) an den ersten Empfänger (4) gesendeten Datenpakete (P) die erste Streamidentifikation (SID1) enthalten,
- wobei in einem während der Ausführung des zweiten Schrittes ausgeführten dritten Schritt von der Datenquelle (1) über eine zweite drahtlose Schnittstelle (7) der Datenquelle (1) eine zweite Anforderung (A2) zur Einrichtung eines zweiten Streams ausgesendet wird,
- wobei die zweite Anforderung (A2) von einem zweiten Empfänger (8) empfangen und über zweite Knoten (K2) der Gesamtheit von Knoten (K1, K2, K3) des leitungsgebundenen offenen Kommunikationsnetzes an die Datensenke (2) weitergeleitet wird,
- wobei aufgrund der zweiten Anforderung (A2) ein zweiter Pfad für den zweiten Stream eingerichtet wird, der von der Datenquelle (1) über den zweiten Empfänger (8) und die zweiten Knoten (K2) zur Datensenke (2) führt, und dem zweiten Stream eine zweite Streamidentifikation (SID2) zugeordnet wird,
- wobei die zweite Streamidentifikation (SID2) mit der ersten Streamidentifikation (SID1) identisch ist,
- wobei von dem zweiten Empfänger (8) und den zweiten Knoten (K2) zur Übermittlung der Datenpakete (P) Ressourcen reserviert werden, so dass gewährleistet ist, dass die Datenpakete (P) des zweiten Streams mit einer vorbestimmten zweiten maximalen Verzögerungszeit nach dem Aussenden des jeweiligen Datenpakets (P) durch die Datenquelle (1) bei der Datensenke (2) eintreffen,
- wobei in einem während der Ausführung des zweiten Schrittes ausgeführten vierten Schritt zumindest ein Teil der Datenpakete (P) von der Datenquelle (1) an den zweiten Empfänger (8) gesendet wird und von dem zweiten Empfänger (8) über die zweiten Knoten (K2) an die Datensenke (2) weitergeleitet wird,
- wobei die von der Datenquelle (1) an den zweiten Empfänger (8) gesendeten Datenpakete (P) die zweite Streamidentifikation (SID2) enthalten,
- wobei die Datenpakete (P) Nutzdaten (6, 10) und einen Header (5, 9) umfassen und die Nutzdaten (6) zumindest eines Teils der an den ersten Empfänger (4) gesendeten Datenpakete (P) mit den Nutzdaten (10) zumindest eines Teils der an den zweiten Empfänger (8) gesendeten Datenpakete (P) identisch ist und
- wobei zumindest denjenigen an den ersten Empfänger (4) und den zweiten Empfänger (8) gesendeten Datenpaketen (P), deren Nutzdaten (6, 10) identisch sind, von der Datenquelle (1) identische Paketidentifikationen (PID) zugeordnet werden.

2. Übermittlungsverfahren nach Anspruch 1,
**dadurch gekennzeichnet,**
- **dass** die ersten und zweiten Knotenpunkte (K1, K2) bei Empfang eines Datenpakets (P), dem eine Paketidentifikation (PID) zugeordnet ist, prüfen, ob sie bereits ein Datenpaket (P) mit derselben Paketidentifikation (PID) empfangen haben, und
- **dass** die ersten und zweiten Knotenpunkte (K1, K2) ein Datenpaket (P), dem eine Paketidentifikation (PID) zugeordnet ist, an den jeweils nachfolgenden ersten bzw. zweiten Knotenpunkt (K1, K2) weiterleiten, wenn sie noch kein Datenpaket (P) mit derselben Paketidentifikation (PID) empfangen haben, und anderenfalls das entsprechende Datenpaket (P) nicht weiterleiten.

3. Übermittlungsverfahren nach Anspruch 2,
**dadurch gekennzeichnet,**
**dass** diejenigen der ersten Knoten (K1), die zugleich auch zweite Knoten (K2) sind, zur Übermittlung der Datenpakete (P) als Bestandteile des zweiten Streams dieselben Ressourcen reservieren, die sie bereits zur Übermittlung der Datenpakete (P) als Bestandteile des ersten Streams reserviert haben.

4. Übermittlungsverfahren nach Anspruch 1, 2 oder 3
**dadurch gekennzeichnet,**
**dass** der erste Pfad nach dem Einrichten des zweiten Pfades wieder aufgelöst wird.

5. Übermittlungsverfahren nach einem der obigen Ansprüche,
**dadurch gekennzeichnet,**
**dass** die Header (5, 9) der Datenpakete (P) jeweils eine Zusatzinformation (E1, E2) enthalten, aus der hervorgeht, ob sie von der Datenquelle (1) an den ersten oder den zweiten Empfänger (4, 8) gesendet werden.

6. Datenübermittlungssystem,
- wobei das Datenübermittlungssystem eine Datenquelle (1), eine Datensenke (2), einen ersten und einen zweiten Empfänger (4, 8), sowie eine Gesamtheit von Knoten (K1, K2, K3) eines leitungsgebundenen offenen Kommunikationsnetzes umfasst,
- wobei der erste Empfänger (4) und die Datensenke (2) über erste Knoten (K1) der Gesamtheit von Knoten (K1, K2, K3) und der zweite Empfänger (8) und die Datensenke (2) über zweite Knoten (K2) der Gesamtheit von Knoten (K1, K2, K3) miteinander verbunden sind und
- wobei die Datenquelle (1), der erste und der zweite Empfänger (4, 8), die Datensenke (2) und zumindest die ersten und zweiten Knoten (K1, K2) des leitungsgebundenen offenen Kommunikationsnetzes derart ausgebildet sind, dass sie im Betrieb gemäß einem Übermittlungsverfahren nach einem der obigen Ansprüche miteinander zusammenwirken.
